Europäisches Patentamt

European Patent Office

Office européen des brevets

(11) Publication number: **0 268 339**
A2

## (12) EUROPEAN PATENT APPLICATION

(21) Application number: 87202221.5

(22) Date of filing: 14.11.87

(51) Int. Cl.⁴: **F16K 15/14** , F01L 3/20

(30) Priority: 17.11.86 IT 2235486
28.05.87 IT 2070387

(43) Date of publication of application:
**25.05.88 Bulletin 88/21**

(84) Designated Contracting States:
**AT DE ES FR GB IT SE**

(71) Applicant: **ADLER S.p.A.**
**Via Soffredini 75**
**Milano(IT)**

(72) Inventor: **Morone, Alfio**
**Via Soffredini 75**
**Milano(IT)**
Inventor: **Morone, Sergio**
**Via Soffredini 75**
**Milano(IT)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) **Non-return reed valve for the delivery of fuel into internal combustion engines, with directed flow and maximum adjustable opening, with elastic resistance plates.**

(57) The non-return reed valve for the delivery of fuel into internal combustion engines in accordance with this invention consists of a hollow body, having at least one surface chamfered obliquely at one end, fitted with a base flange at the other end for its connection to the inlet port fuel mixture on the engine block said body having one or more openings on the chamfered surface or surfaces, which openings are closed off, on the face turned towards the engine, outside the body of the valve, by respective elastic reeds clamped tight when at least against the edge of the openings and elastically flexible so as to open the passage through the openings under the effect of a greater pressure inside the body of the valve, towards the carburettor, than the pressure outside the body of the said valve, towards the engine, maintaining closure in the presence of a greater pressure outside the body of the valve, the direction of the engine, than the pressure inside the body of the valve, towards the carburettor, in which there are components inside the body of the valve for conveying the flow of the fluid consisting of the fuel mixture direct to the engine through the openings of the said body, avoiding zones of turbulence, and controllable components for limiting the deflection of the fins under the effect of the dynamic thrust of the fuel mixture, there also being further means of elastic preloading of the reeds, acting near the free ends of the said reeds, which give way elastically under the thrust of the reeds at the time of opening.

Fig. 1

## Non-return reed valve for the delivery of fuel into internal combustion engines, with directed flow and maximum adjustable opening, with elastic resistance plates.

The subject of this invention is a reed valve for the delivery of fuel into endothermic engines with directed flow and maximum adjustable opening, capable of allowing a passage of fluid with reduced load loss.

In endothermic engines there are one or more carburettors which, through their respective pipes, supply the cylinders in which combustion takes place; these cylinders in the case of four-stroke engines, are equipped with the necessary inlet and exhaust valves, whilst in two-stroke engines the inlet and exhaust ports of each cylinder are blocked by the relative piston on its alternating stroke.

To guarantee correct supply to the cylinder at the moment of admission, without however any losses or irregularities in the successive phases, it is expedient to have a non-return valve on the pipe which supplies the mixture consisting of air and atomized combustible fluid, hereinafter abbreviated to fuel mixture, to the cylinder, which will allow passage of the said mixture to the cylinder, but will prevent its return in the event of an overpressure inside it, due to an unexpected closing of the inlet port.

Valves of this type are known, and have a body fitted with plates which are flexibly elastic under the dynamic thrust effect of the fuel, but these valves suffer from a number of problems, caused largely by the high load loss which their presence introduces into the engine supply pipe, particularly as a result or the formation of zones of turbulence inside the valve, in which the flow of fluid consisting of the fuel mixture must be split up into partial flows in each of the passage openings provided.

A further requirement arises from the possibility of regulating the maximum amplitude of opening which the valve may achieve under the effect of the passage of the fuel mixture, thereby regulating the supply capacity in addition to the effective regulation of the carburettor valve.

The known valves also present a number of problems particularly in the case of two-stroke engines for use on high performance motor cycles, specially adapted for sports purposes.

In fact such engines may reach fairly high speeds of rotation, which require that the reeds of the valve bend and straighten in extremely short times, in order to open and close the inlet port at the times required by the speed of rotation of the engine.

For this purpose, the reeds would have to have a high degree of rigidity, in order to prevent "fluttering" of the said reeds at the maximum speeds, which would give rise to irregularities in supply and operation of the engine.

It is in fact necessary for the reeds to have their own very high resonance frequency, higher than the maximum speed of rotation of the engine, so as not to enter into resonance with the latter, effecting opening and closing movements of uncontrolled amplitude and no longer corresponding to the successive cylinder intake phases.

The inherent frequency of vibration of the reeds depends on their rigidity, and is all the higher the more rigid the reeds: in particular, in the case of engines for use on motor cycles, operating at particularly high maximum speeds of rotation, very rigid reeds would be necessary so as to have an inherent frequency which would definitely be greater than the maximum engine speed allowed.

The use of very rigid reeds is not however suitable for operation at low revolutions, since under these conditions the vacuums which occur in the cylinder are low, and therefore not sufficient to cause a deflection of the reeds sufficient to allow the passage of the necessary quantity of fuel mixture.

The problem therefore arises of supplying a valve to feed fuel mixture to the cylinders of an engine which will make it possible to bring about a passage of fluid with reduced load loss, and in addition make it possible to vary, through appropriate control components, the maximum opening position of the valve, even during operation of the engine, and which in addition will be effective at the maximum speeds, with no occurrence of the aforementioned resonance phenomena, allowing correct operation of the engine under these conditions, and at the same time also allowing the best supply conditions at the lower speeds.

These results are achieved by this invention, which provides a non-return reed valve for the delivery of fuel into internal combustion engines consisting of a hollow body, having at least one surface chamfered obliquely at one end, fitted with a base flange at the other end for its connection to the fuel mixture inlet port on the engine block, said body having one or more openings on the chamfered surface or surfaces, which openings are closed off, on the face turned towards the engine, outside the body of the valve, by respective elastic reeds clamped tight when at rest against the edge of the openings and elastically flexible so as to open the passage through the openings under the effect of a greater pressure inside the body of the valve, towards the carburettor, than the pressure outside the body or the said valve, towards the engine, maintaining closure in the presence of a greater pressure outside the body of the valve, towards the engine, than the pressure inside the body of the valve, towards the carburettor, in which there are components inside the body of the valve for conveying the flow of the fluid consisting of the fuel mixture direct to the engine through the openings of the said body, avoiding zones of turbulence, and controllable components for limiting the deflection of the fins under the effect of the dynamic thrust of the fuel mixture, there also being further means of elastic preloading of the reeds, acting near the free ends of the said reeds, which give way elastically under the thrust of the reeds at the time of opening.

In one embodiment of this invention the non-return reed valve consists of an internally hollow body, having a polygonal cross-section, with profile corresponding to the dimensions of the port or ports admitting the fuel mixture to a cylinder of an engine, chamfered obliquely on two opposite sides at one end, and fitted with a flange for connection to the engine at the other end, on the flat chamfered faces of which there are openings which may be closed off by corresponding elastic reeds, connected to one end of the outside surface of the body, inside which there is an elongated deflecting element, transversal with respect to the direction of flow of the fluid passing through the valve, capable of splitting up the said flow into two parts, directed towards the openings of the body.

The deflecting element may have the cross-section of a wing profile, or the cross-section of a corner.

The deflecting element can move in parallel with the flow of the fluid through the valve, approaching or moving away from the openings of the valve body, and may be locked in the required position.

For this purpose, the deflecting element is fitted with means of screw connection to the valve body, together with slots on the said body, there being reeds for closing off the said slots which can be clamped against the side walls of the valve body outside the actual body following the tightening of the screws for locking the deflecting element in position.

In a suitable embodiment, the valve body is internally hollow, having a polygonal cross-section, with a profile corresponding to the dimensions of the port or ports for admitting the fuel mixture to a cylinder of an engine, chamfered obliquely on all the opposite sides at one end, and fitted with a flange for connection to the engine at the other end, on the flat chamfered faces of which there are openings which can be closed off by corresponding elastic reeds, connected to one end of the outside surface of the body, inside which there is an element for deflecting the flow of fluid passing through the valve, capable of conveying the said flow without turbulent zones to the openings of the valve body.

In this embodiment, the valve body has the shape of a pyramid and the openings and corresponding closure reeds have a triangular or trapezoidal shape; in this valve embodiment, the deflecting element consists of a spherical body supported along the axis of symmetry of the valve body or, more generally, of a body of circular cross-section with elongated aerodynamic shape.

In the non-return reed valve according to the invention there are shaped fins for limiting the maximum deflection of the reeds which close off the openings in the valve body, the position of the fins being capable of modification by means of control to vary the extent of the maximum permissible opening of the reeds under the dynamic thrust of the fluid passing through the valve through the openings.

The finds are each formed in two parts connected to a hinge between them, of which one is connected to the valve body near the zone of connection of the flexible reeds and the other may be rotated with respect to the former, being fitted at its own free end with a rod in turn connected to a small manoeuvring rod which can slide axially in a seat on the valve body, actuated by external control components.

The moving parts of the fins located on two faces of the valve body are connected to respective rods, connected at the opposite end to one and the same control rod, in turn controlled by a cable or the like. The means for elastic preloading of the reeds consist of respective arcuate elastic plates, with the convex side outwards, connected at one end to the valve body near the zone of connection of the reeds and resting at the opposite end near the free end of the said reeds, outside the reeds, with elastic preloading, the plates being elastically flexible under the action of the thrust of the reeds at the time of opening.

The intermediate portion of the elastic plates, shaped like an arc, rests with its convexity against the walls of the pipe which accommodates the valve, in a condition of elastic interference, this interference causing a deformation of the plates increasing the elastic load of these applied to the reeds.

The plates should be connected to the valve body forming an assembly with the elastic reeds.

The free end portion of the reeds bending before the point of support of the relative elastic plate has a length of between 10 and 40% of the whole bending length of the said reeds in relation to the characteristics desired in the valve.

The reeds have a thickness suitable for allowing the deflections of their end portion, in addition to the zone of support of the relative elastic plate, even under the effect of the vacuums corresponding to the lowest speeds of operation of the engine.

Preferably, the convex portion of the elastic plates has a sealing effect in its zone of support against the walls of the inlet pipe, thereby offering a surface on which the cylinder pressure may be exercised, facilitating the closure of the terminal portion of the said reeds.

The convex portion of the elastic plates, in its support area against the walls of the inlet pipe may be suitably provided with an elastomeric sealing material coating.

Several elastic plates may be provided for one valve, which are interchangeable, having different values of curvature, length or rigidity, making it possible to choose from them those having the properties best suited for the engine in use, again in relation to the specific conditions of utilisation of the said engine.

In the engine block, there may also be means for adjusting the thrust on the convex portions of the elastic plates, capable of continuously varying the value of the elastic preloading on the latter, for adaptation to the characteristics of the engine. Greater details may be obtained from the following description, with reference to the attached drawings, in which :

Fig. 1 shows a valve in accordance with the invention fitted with a flow conveying element, in section along plane I-I of Fig. 2;

Fig. 2 shows a section along plane II-II of Fig. 1;

Fig. 3 is a perspective view of the valve body in pyramidal version;

Fig. 4 is an axial section through the complete valve in Fig. 3:

Fig. 5 is the side view in direction V of Fig. 6, of a valve in accordance with the invention, fitted with a maximum opening regulator;

Fig. 6 is a view in direction VI of the valve in Fig. 5;

Fig. 7 is a diagrammatic section of the cylinder of an internal combustion engine fitted with a valve in accordance with the invention with elastic resistance plates;

Fig. 8 is a section along plane VIII-VIII of Fig. 7;

Fig. 9 is a part section on a larger scale of the valve in Fig. 7;

Fig. 10 is a side view of the valve in Fig. 9.

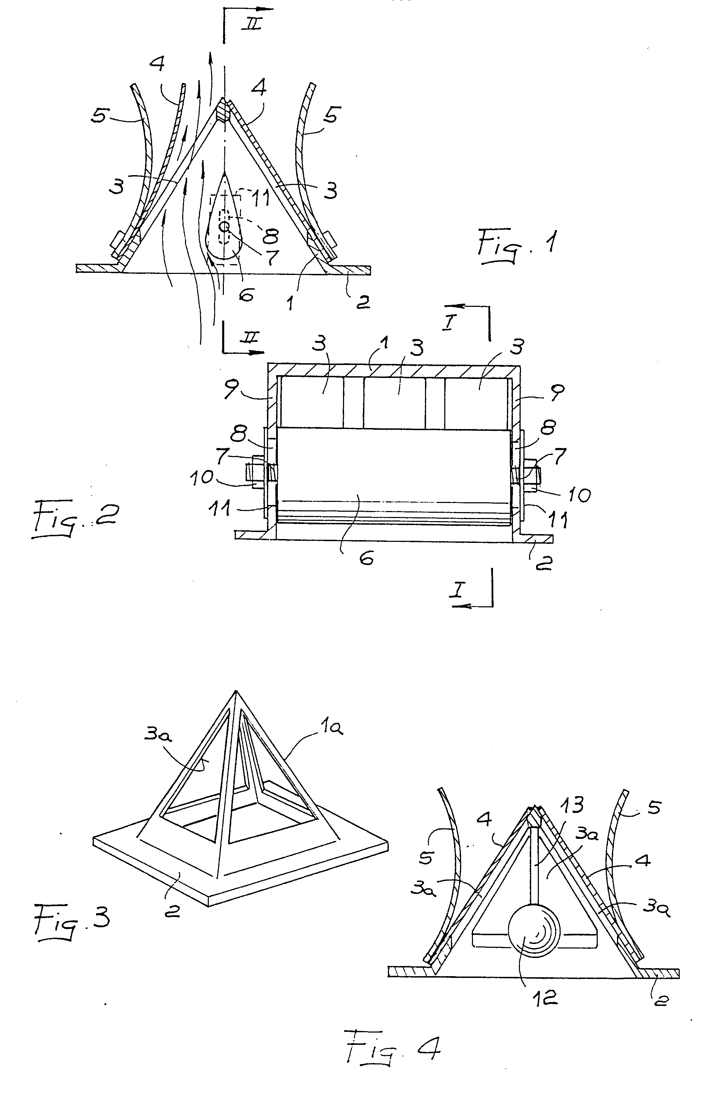

As Fig. 1 shows, a valve for admitting a fuel mixture to an internal combustion engine in general consists of a valve body 1, fitted with a flange 2 for connection to the engine, containing openings 3 capable of allowing the passage of the fuel mixture, closed off by elastic reeds 4 capable of being deflected to open the passage in the presence of a vacuum inside the cylinder or cylinders of the engine as shown in the left hand portion of Fig. 1 and also capable of returning elastically into the closure position, in contact against the edges of openings 4, having a sealing effect on the latter, in the presence of greater pressure in the cylinder or cylinders than the pressure which exists in the fuel mixture feed pipe coming from the carburettor, as shown in the right hand portion of Fig. 1.

The amplitude of the opening of the reeds depends on the pressure differential between the zone upstream and the zone downstream of the valve and the maximum opening of the reeds is determined by the shaped stop fins 5, arranged outside the reeds and against which the reeds find support when the dynamic thrust of the fluid passing through the valve causes the maximum permitted deflection.

As Fig. 1 shows, for the purpose of obtaining optimum conveying of the flow of fuel mixture through openings 3 located on the sides of body 1, the invention provides for a deflection profile 6, located inside body 1, capable of splitting up the incoming flow into separate currents directed towards the opposite openings of the valve body, reducing the load losses on passing through the said valve.

Deflection profile 6 may have a wing section, as shown in Fig. 1, or be shaped like a corner, or otherwise, in relation to the geometry of the openings of body 1 and the speed and direction of the flow of fuel mixture, for the purpose of obtaining a flow as laminar as possible in the top of the valve, where the commencement of the opening of the reeds occurs, reducing the turbulence and thus improving the performance, particularly at low speeds.

Deflecting element 6 may be fixed, in a position determined to bring about the best operation, and in this case may be produced as an integral part of the structure of body 1, or rigidly attached to the latter, or may be suitably regulated in position, for the purpose of adapting the arrangement of the said element to any particular type of engine or system of operation. In this case, as shown in Figs. 1, 2, deflecting element 6 is carried by a pair of screws or similar threaded components 7 passing respectively through slots 8 of sides 9 on body 1, so as to be able to slide in the said slots and be locked in the correct position by nuts 10 or the like.

For the purpose of preventing a passage of fuel mixture through holes 8, which would therefore not be controlled by the shut-off reeds of the valve, there are side plates 11, made of metal or plastic, inserted on screws 7 and tightened by nuts 10 intended to shut off the slots 8 in any position taken up by element 6. In the event that the engine fuel mixture inlet opening is square, or circular, then the valve body should be made as illustrated in Fig. 3, shaped like a pyramid, with openings 3a which have a triangular or trapezoidal section; this makes it possible to have, at the time of closure of the openings, reeds which have a triangular or trapezoidal shape, which have variable rigidity passing from the free end to the base connected to body 1a, in this way achieving a greater sensitivity of the reeds to the minimum vacuums, and a greater resistance to the maximum vacuums. In addition, the regular shape of the base of the pyramid, which may be square, as shown, or pentagonal, hexagonal and so on, makes it possible to obtain a passage cross-section for the fluid which offers the least load loss, therefore increasing the performance of the engine with respect to valves with ports which have a rectangular passage cross-section.

In the case of the pyramidal valve, as shown in Fig. 4, a flow deflecting element 12 may also be provided of the type described above, and in this case is spherical in shape, as shown, or is in the shape of a drop, and may be carried by a bar 13 connected to the top end of valve body 1a.

The maximum deflection of reeds 4, corresponding to the maximum opening of the port or ports of the valve is determined by stop fins 5, against which reeds 4 rest.

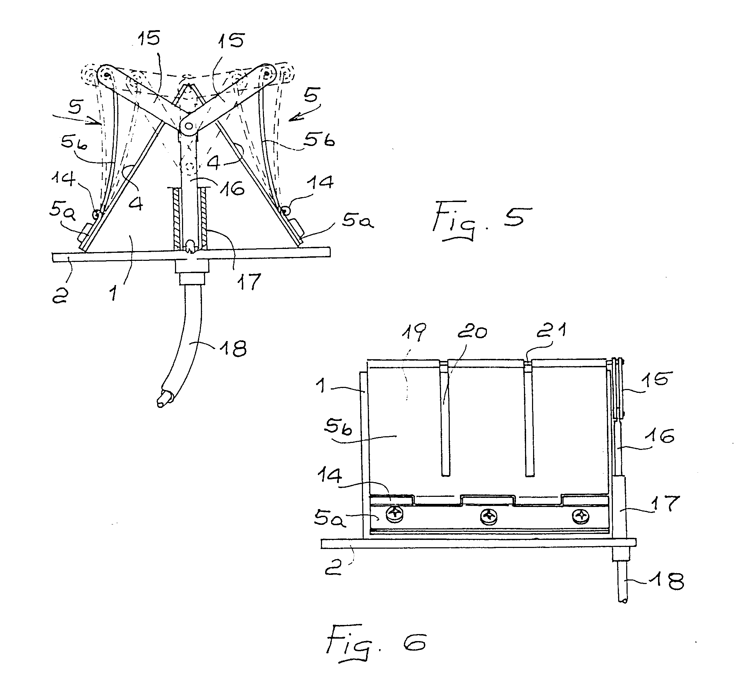

In many cases there is a requirement to vary the maximum opening position, in order to increase or reduce the amount of fuel mixture taken in, in addition or as an alternative to the regulation effected by the carburettor valve. For this purpose, as shown in Figs. 5 and 6, provision is made in the valve for the fins 5 to be produced in two parts each 5a, 5b, respectively fixed, and connected to valve body 1 by means of screws or the like, and moving, connected together by a hinge 14. The free end of the moving portion 5b of each of the fins 5 is connected to one end of a rod 15. The opposite end of the rod is connected in turn, together with the end of the relative rod on the fin on the other side of the valve, to a small rod 16 which slides axially in a seat 17 made for it in valve body 1.

It is therefore possible to connect a sheathed cable 18 to small rod 16 for manual remote control of the opening position of the fins, or another control component.

As shown in Fig. 5 with broken lines, it therefore transpires that the axial movement of small rod 16 causes rotation of moving part 5b of fins 5, approaching or moving away from the valve body, so as to modify at will the maximum opening position.

In the event that fins 5 consist of several portions 19, separated by notches 20, as is usually the case, said portions each corresponding to an opening, which may be closed by the relative reed, it will be expedient if there is a single end pin 21, connecting together all the fin portions relating to one side of the valve, controlled by a single rod 15, so as to have simultaneous movement of the fins with a single control.

The curvature of moving portion 5b of fins 5 should be selected equal to a value intermediate between that corresponding to the specified minimum position and the maximum opening position, so as not to cause excessive stresses on the reeds due to an irregular deformation.

An alternative embodiment of the invention, which is particularly expedient advantage, is illustrated with reference to the illustrations from 7 to 10.

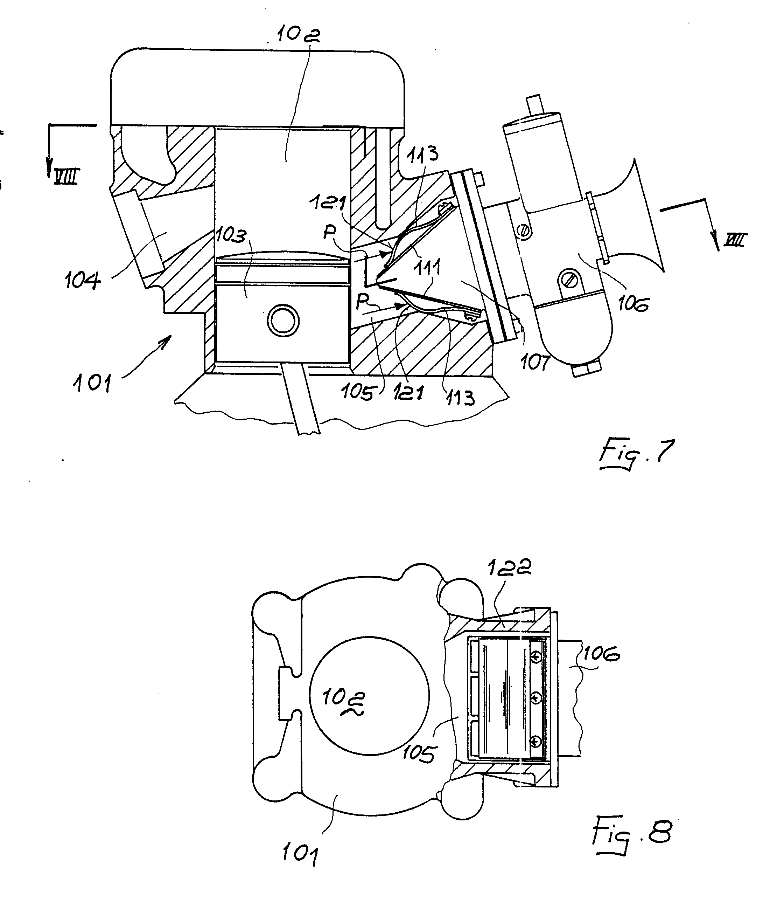

As shown by Figs. 7 and 8, an internal combustion engine 101, of the two-stroke type, has at least one cylinder 102 in which a piston 103 slides, connected through a rod to a crankshaft and to the transmission components of the engine; cylinder 102 is fitted with an exhaust pipe 104 and an inlet pipe 105.

A carburettor 106 is connected to inlet pipe 105, the air-fuel supply mixture being formed in the carburettor; between the carburettor and the inlet pipe there is a non-return reed valve 107, suitably attached to the engine block with the same attachment screws as the carburettor or its connecting sleeve.

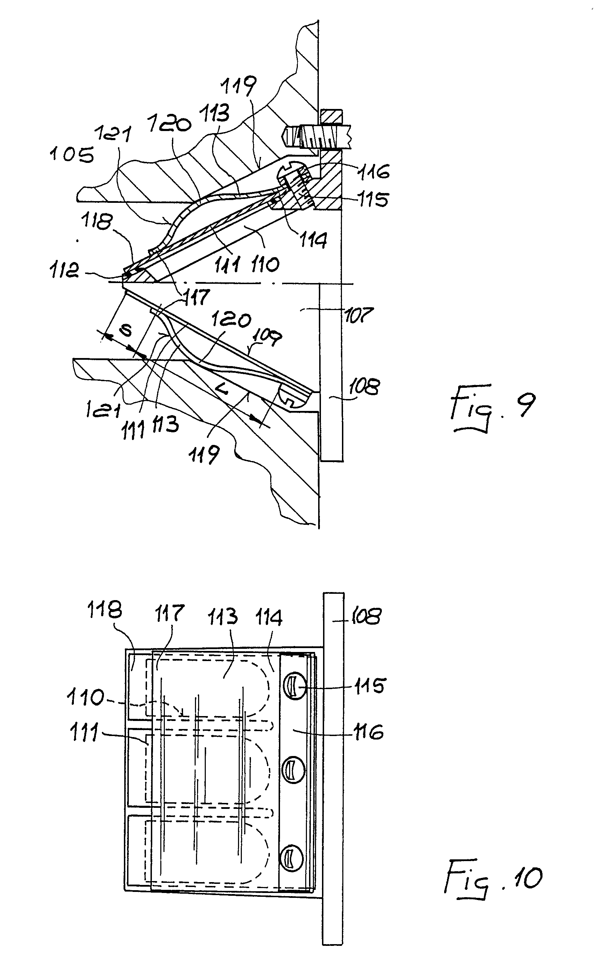

Valve 107 possesses, in the form illustrated in the figures, a largely wedge-shaped body with rectangular base fitted with flange 108 for connection to the engine block, and a pair of opposite oblique sides 109, fitted with several openings 110, visible in figures 9 and 10, closed off by respective elastic reeds 111, connected to the body near the base of the valve at one end, and freely flexible at the opposite end.

In order to guarantee a seal, the surfaces of the valve body against which reeds 111 rest are given a lining 112 of an elastomeric material having suitable characteristics.

Outside reeds 111 there are in addition the arcuate elastic plates 113, which are connected at their base 114 to the body of the valve, through screws 115 and support bars 116, and at the opposite end 117 rest against reeds 111, near their free terminal zone 118, exercising on them an elastic load intended to keep them in the closed position.

Inlet pipe 105 has walls 119 converging towards the cylinder and these walls support the intermediate convex portion 120 of the plates 113; the curvature and arrangement of the plates is specified so as to complete the fitment of the valve on the seat forcing the said plates against the walls of the pipe, so as to increase the elastic closure preloading imposed on reeds 111.

In general, for this purpose, an interference with the corresponding walls 119 of a few millimetres, for example 1-2 millimetres may be provided at the design stage of the profile of the plates 113.

The length of section S of reeds 111 projecting beyond the end of plates 113, therefore obliged to bend freely under the effect of the pressure differentials present, and which may therefore determine the behaviour characteristics of the valve at low speeds, must be determined in terms of the engine characteristics, an appropriate value may be between 10 and 40% of L, where L stands for the total bending length of the reeds, shown in Fig. 9; in a preferred embodiment, this value is around 30-35% of L.

The presence of elastic plates 113 makes it possible to produce reeds 111 particularly thin, so as to allow the opening of their end portion 118, unhindered by plate 113, even under the limited pressure differentials which occur at low speeds, but without an excessive opening or the said reeds at higher speeds, or delays in their closure.

In fact, elastic plates 113 resist the opening of reeds 111, thanks to the elastic return force created by their shaping and resistance to bending and the contact with the converging walls 119 of inlet pipe 105; in addition, surface 121 of plates 113 facing towards the cylinder is exposed to the pressure in the latter occurring at the end of the intake phase and the action of this pressure facilitates closure of the said reeds, as indicated by arrow P in Fig. 7.

In order for this effect to be appreciable, it is required that the space between the parallel side walls 22 of pipe 105 and the side edges of the elastic plates is as small as possible, so as to prevent, during the extremely brief time in which this phenomenon occurs, the increase in pressure also being transmitted subsequently to plates 113.

Advantageously, the seal between plates 113 and walls 119 may be increased with an elastomeric or similar coating on the portion of the said plates intended to come into contact with walls 119.

The thrust in the closing direction of the reeds created by the elastic plates is exerted particularly on their terminal zone, which is more subject, at high speeds of rotation, to irregular "fluttering" movements, and therefore guarantees at these speeds and operation of the valve is steady, with openings and closures constantly in phase with the movement of the piston, with no occurrence of resonance phenomena.

For the purpose of modifying the elastic load value imposed by plates 113 on reeds 111, a group of interchangeable reeds may be provided for a valve, having different characteristics of length, rigidity, curvature, interference with the walls of the inlet pipe and the like, so as to make it possible, in terms of the specific characteristics of the engine and the specified operating conditions, to select the valve having optimum behaviour.

For this purpose, a component adjustable with screws or the like may be provided in the engine block, which component acts on portions 120 of the plates, varying the elastic load, or a device for varying the depth of insertion of the valve in the inlet pipe.

The description of the invention relates to a particular shape of valve body, shown as an example, but the actual invention may be applied to valves of different shape, for this purpose elastic plate 113 may be dimensioned, both from the point of view of its shape, to produce an optimum elastic resistance on the reeds, and from the point of view of its curvature and its resistance to bending, in order to adapt to the specific characteristics of the engine for which the valve is intended.

A suitable material for making plates 113 is steel, but other materials may also be specified such as acrylic resins charged with glass fibre and similar materials of appropriate characteristics.

Many variants may be introduced in practice without going beyond the scope of the invention in its general characteristics.

## Claims

1) Non-return reed valve for the delivery of fuel into internal combustion engines, consisting of a hollow body, having at least one surface chamfered obliquely at one end, fitted with a base flange at the other end for its connection to the fuel mixture inlet port on the engine block, said body having one or more openings on the chamfered surface or surfaces, which openings are closed off, on the face turned towards the engine, outside the body of the valve, by respective elastic reeds clamped tight when at rest against the edge of the openings and elastically flexible so as to open the passage through the openings under the effect of a greater pressure inside the body of the valve, in towards the carburettor, than the pressure outside the body of the said valve towards the engine, maintaining closure in the presence of a greater pressure outside the body of the valve, towards the engine, than respect to the pressure inside the body of the valve, towards the carburettor characterized in that there are components inside the body of the valve for conveying the fluid flow consisting of the fuel mixture direct to the engine through the openings of the said body and controllable components for limiting the deflection of the fins under the effect of the dynamic thrust of the fuel mixture, there also being further means of elastic preloading of the reeds, acting near the free ends of the said reeds, which give way elastically under the thrust of the reeds at the time of opening.

2) Non-return reed valve for the delivery or fuel into internal combustion engines according to Claim 1, characterized in that it consists of an internally hollow body, having a polygonal cross-section, with profile corresponding to the dimensions of the port or ports for admitting the fuel mixture to a cylinder of an engine, chamfered obliquely on two opposite sides at one end, and fitted with a flange for connection to the engine at the other end, on the flat chamfered faces of which there are openings which may be closed off by corresponding elastic reeds, connected at one end to the outside surface of the body, inside which there is an elongated deflecting element, transversal with respect to the direction of flow of the fluid passing through the valve, capable of splitting up the said flow into two parts, directed towards the openings of the body.

3) Non-return reed valve for the delivery of fuel into internal combustion engines according to Claim 2, characterized in that the deflecting element has the cross-section of a wing profile.

4) Non-return reed valve for the delivery of fuel into internal combustion engines according to Claim 2, characterized in that deflecting element has the cross-section of a corner.

5) Non-return reed valve for the delivery of fuel into internal combustion engines according to Claim 2, characterized in that deflecting element can move in parallel with the flow of the fluid through the valve, approaching or moving away from the openings the valve body, and may be locked in the required position.

6) Non-return reed valve for the delivery of fuel into internal combustion engines according to Claim 5, characterized in that the deflecting element is fitted with means of screw connection to the valve body, together with slots on the said body, there being reeds for closing off the said slots which can be clamped against the side walls of the valve body outside the said body following the tightening of the screws for locking the deflecting element in position.

7) Non-return reed valve for the delivery of fuel into internal combustion engines according to Claim 1, characterized in that the valve body is internally hollow, having a polygonal cross-section, with a profile corresponding to the dimensions of the port or ports for admitting the fuel mixture to a cylinder of an engine, chamfered obliquely on all the opposite sides at one end, and fitted with a flange for connection to the engine at the other end, on the flat chamfered faces of which there are openings which may be closed off by corresponding elastic plates, connected to one end of the outside surface of the body, inside which there is an element for deflecting the flow of fluid passing through the valve, capable of conveying the said flow without turbulent zones to the openings of the valve body.

8) Non-return reed valve for the delivery of fuel into internal combustion engines in according to Claim 7, characterized in that the valve body has the shape of a pyramid and the openings and corresponding closure reeds have a triangular or trapezoidal shape.

9) Non-return reed valve for the delivery of fuel into internal combustion engines according to Claims 7, 8, characterized in that the deflecting element consists of a spherical body supported along the axis of symmetry of the valve body.

10) Non-return reed valve for the delivery of fuel into internal combustion engines according to Claims 7, 8, characterized in that the deflecting element consists of a body of circular cross-section with elongated aerodynamic shape.

11) Non-return reed valve for the delivery of fuel into internal combustion engines according to one or more of the preceding claims, characterized in that there are shaped fins for limiting the maximum deflection of the reeds which close off the openings in the valve body, the position of the fins being capable of modification by means of control to vary the extent of the permissible maximum of control of the reeds under the dynamic thrust of the fluid passing through the valve through the openings.

12) Non-return reed valve for the delivery of fuel into internal combustion engines according to Claim 11, characterized in that the fins are each formed in two parts connected to a hinge between them, of which one is connected to the valve body near the zone of connection of the flexible reeds and the other may be rotated with respect to the former, being fitted at its own free end with a rod in turn connected to a small manoeuvring rod which can slide axially in a seat on the valve body, actuated by external control components.

13) Non-return reed valve for the delivery of fuel into internal combustion engines according to Claim 12, characterized in that the moving parts of the fins located on two faces of the valve body are connected to respective rods, connected at the opposite end to one and the same control rod, in turn controlled by a cable or the like.

14) Non-return reed valve for the delivery of fuel into internal combustion engines according to Claim 1, characterized in that the means for elastic preloading or the reeds consist of respective arcuate elastic plates, with the convex side outwards, connected at one end to the valve body near the zone of connection of the reeds and resting at the opposite end near the free end of the said reeds, outside the reeds, with elastic preloading, the plates being elastically flexible under the action of the thrust of the reeds at the time of opening.

15) Non-return reed valve for the delivery of fuel into internal combustion engines according to Claim 14, characterized in that the intermediate portion of the elastic plates, shaped like an arc, rests with its convexity against the walls of the pipe which accommodates the valve, in a condition of elastic interference, this interference causing a deformation of the plates increasing the elastic load of these applied to the reeds.

16) Non-return need valve for the delivery of fuel into internal combustion engines according to Claim 14, characterized in that the plates are connected to the valve body forming an assembly with the elastic reeds.

17) Non-return reed valve for the delivery of fuel into internal combustion engines according to Claim 2, characterized in that the free end portion of the reeds bending before the point of support the relative elastic plate has a length of between 10 and 40% of the whole bending length of the said reeds, in relation to the characteristics desired in the valve.

18) Non-return reed valve for the delivery of fuel into internal combustion engines according to Claim 15, characterized in that the reeds have a thickness suitable for allowing the deflection of their end portion, in addition to the zone of support of the relative elastic plate, even under the effect of the vacuums corresponding to the lowest speeds of operation of the engine.

19) Non-return reed valve for the delivery of fuel into internal combustion engine according to Claim 15, characterized in that the convex portion of the elastic plates has a sealing effect in its zone of support against the walls of the inlet pipe.

20) Non-return reed valve for the delivery of fuel into internal combustion engines according to Claim 19, characterized in that the convex portion of the elastic plates, in its zone of support against the walls of the inlet pipe, is provided with an elastomeric sealing material coating.

21) Non-return reed valve for the delivery of fuel into internal combustion engines according to Claim 15, characterized in that several elastic plates may be provided for one valve, which are interchangeable, having different values of curvature, length or rigidity, making it possible to choose from them those having the properties best suited for the engine in use, again in relation to the specific conditions of utilisation of the said engine.

22) Non-return reed valve for the delivery of fuel into internal combustion engines according to Claim 15, characterized in that, in the engine block, there are means for adjusting the thrust on the convex portions of the elastic plates, capable of continuously varying the value of the elastic preloading on the latter, for adaptation to the chararacteristics of the engine.

0 268 339

Fig. 1

Fig. 2

Fig. 3

Fig. 4

Fig. 5

Fig. 6

Fig. 7

Fig. 8

Fig. 9

Fig. 10